# EUROPEAN PATENT APPLICATION

(11) **EP 3 739 774 A1**
(43) Date of publication of application: **18.11.2020**
(21) Application number: 20161162.1
(22) Date of filing: 05.03.2020
(51) Int. Cl.: H04B 10/079

(54) **OPTICAL TEST APPARATUS**

(30) Priority: 21.03.2019 US 201916360683
(71) Applicant: AFL Telecommunications LLC, Duncan, South Carolina 29334 (US)
(72) Inventor: Liu, Bin, Duncan, SC South Carolina 29334 (US); Prescott, Scott, Duncan, SC South Carolina 29334 (US); Eddy, Dale, Duncan, SC South Carolina 29334 (US)
(74) Representative: Gray, James

(57) **Abstract**

An optical test apparatus includes a collimator comprising a dual-fiber ferrule and a collimating lens. The optical test apparatus also includes an optical filter optically aligned with the collimator, a first optical fiber pigtail connected to the collimator at a first bore of the dual-fiber ferrule, a second optical fiber pigtail connected to the collimator at a second bore of the dual-fiber ferrule, and a photodetector in optical communication with the collimator. The optical test apparatus defines a reflection path from the first optical fiber pigtail to the optical filter and from the optical filter to the second optical fiber pigtail and a transmission path from the first optical fiber pigtail through the optical filter to the photodetector.

## Description

### FIELD OF THE INVENTION

The present disclosure relates generally to optical fiber test apparatuses, and more particularly to test apparatuses for in-line bi-directional testing of one or more selected wavelengths of light travelling through an optical system.

### BACKGROUND OF THE INVENTION

Measuring optical power levels of an operating optical communications system requires the use of an inline power meter capable of measuring the power of individual wavelength components of the optical signal travelling in the optical fiber by sampling a portion of the total signal. Such optical communications systems may be, e.g., passive optical networks ("PON"), like those used in fiber to the "X" (FTTX, where "X" may be: H=home, C=curb, N=node, P=premises, etc.) networks, optical local area networks ("OLANs"), and coarse wavelength division multiplexing ("CWDM") links, among others.

Existing apparatuses for measuring optical power levels in operating optical communications systems tend to have complex and bulky optical structures for signal sampling and spectral power detection. As a result, excessive optical loss may occur within these optical structures and may limit the dynamic range of the power measurement.

Accordingly, improved optical fiber test apparatuses are desired in the art. In particular, optical fiber test apparatuses that are scalable to measure various numbers of different wavelength components within the two-way signal traffic would be advantageous. Additionally, optical fiber test apparatuses that measure the optical power levels without compromising the signal quality and integrity of the two-way signal traffic in the operating optical communications system would be advantageous.

### BRIEF DESCRIPTION OF THE INVENTION

Aspects and advantages of the invention will be set forth in part in the following description, or may be obvious from the description, or may be learned through practice of the invention.

In accordance with one embodiment, an optical test apparatus is provided. The optical test apparatus includes a collimator comprising a dual-fiber ferrule and a collimating lens. The optical test apparatus also includes an optical filter optically aligned with the collimator, a first optical fiber pigtail connected to the collimator at a first bore of the dual-fiber ferrule, a second optical fiber pigtail connected to the collimator at a second bore of the dual-fiber ferrule, and a photodetector in optical communication with the collimator. The optical test apparatus defines a reflection path from the first optical fiber pigtail to the optical filter and from the optical filter to the second optical fiber pigtail and a transmission path from the first optical fiber pigtail through the optical filter to the photodetector.

In accordance with another embodiment, an inline multi-wavelength power measurement apparatus is provided. The inline multi-wavelength power measurement apparatus includes a first optical test apparatus and a second optical test apparatus serially connected to the first optical test apparatus. The first optical test apparatus includes a collimator comprising a dual-fiber ferrule and a collimating lens. The first optical test apparatus also includes an optical filter having a first passband and optically aligned with the collimator of the first optical test apparatus, a first optical fiber pigtail connected to the collimator of the first optical test apparatus at a first bore of the dual-fiber ferrule of the first optical test apparatus, a second optical fiber pigtail connected to the collimator of the first optical test apparatus at a second bore of the dual-fiber ferrule of the first optical test apparatus, and a photodetector in optical communication with the collimator of the first optical test apparatus. The first optical test apparatus defines a reflection path from the first optical fiber pigtail of the first optical test apparatus to the optical filter having the first passband and from the optical filter having the first passband to the second optical fiber pigtail of the first optical test apparatus and a transmission path from the first optical fiber pigtail of the first optical test apparatus through the optical filter having the first passband to the photodetector of the first optical test apparatus. The second optical test apparatus includes a collimator comprising a dual-fiber ferrule and a collimating lens. The second optical test apparatus also includes an optical filter having a second passband different from the first passband and optically aligned with the collimator of the second optical test apparatus, a first optical fiber pigtail connected to the collimator of the second optical test apparatus at a first bore of the dual-fiber ferrule of the second optical test apparatus, a second optical fiber pigtail connected to the collimator of the second optical test apparatus at a second bore of the dual-fiber ferrule of the second optical test apparatus, and a photodetector in optical communication with the collimator of the second optical test apparatus. The second optical test apparatus defines a reflection path from the first optical fiber pigtail of the second optical test apparatus to the optical filter having the second passband and from the optical filter having the second passband to the second optical fiber pigtail of the second optical test apparatus and a transmission path from the first optical fiber pigtail of the second optical test apparatus through the optical filter having the second passband to the photodetector of the second optical test apparatus.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 illustrates an optical test apparatus in accordance with one or more example embodiments of the present disclosure.
FIG. 2 illustrates an optical test apparatus in accordance with one or more additional example embodiments of the present disclosure.
FIG. 3 illustrates an optical test apparatus in accordance with one or more further example embodiments of the present disclosure.
FIG. 4 provides an example spectral reflectance/transmittance curve of an exemplary bandpass optical filter as may be incorporated in one or more example embodiments of the present disclosure.
FIG. 5 illustrates an inline multi-wavelength power measurement apparatus in accordance with one or more example embodiments of the present disclosure, the inline multi-wavelength power measurement apparatus comprising a plurality of optical test apparatuses.
FIG. 6 illustrates an inline multi-wavelength power measurement apparatus in accordance with one or more additional example embodiments of the present disclosure, the inline multi-wavelength power measurement apparatus comprising a plurality of optical test apparatuses.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, terms of approximation, such as "generally," or "about" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

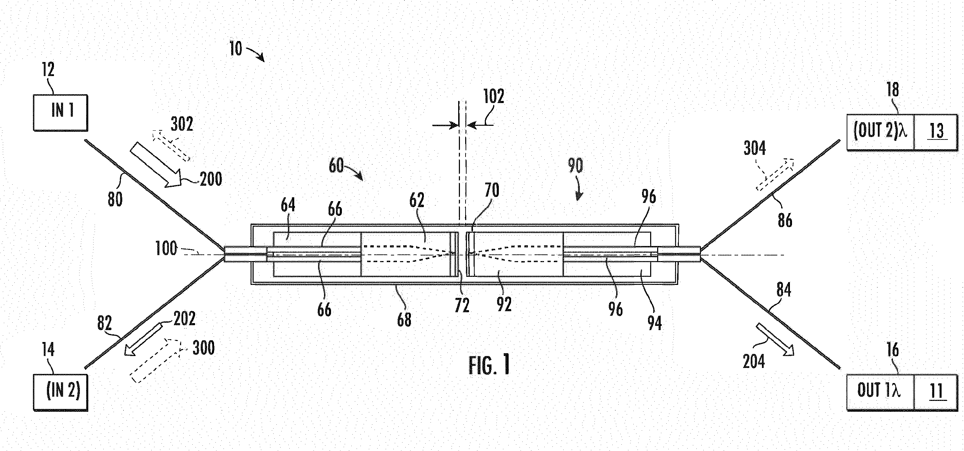

Referring now to FIGS. 1 through 3, various embodiments of optical test apparatus 10 in accordance with the present disclosure are provided. The test apparatus 10 may, for example, include a first input (IN 1) 12 and a second input (IN 2) 14. The first and second inputs 12 and 14 may each be connected to an operating optical communications system to receive light signals, e.g. infrared light, travelling through the system for transmission through the other components of the test apparatus 10. The inputs 12 and 14 may each be or include, for example, a universal connector interface or an FC connector (i.e., ferrule connector). Suitable FC connectors may include, for example, FC/UPC and FC/APC connectors. Alternatively, however, other suitable optical connectors or splices may be utilized. The light signals may include light at one or more suitable predetermined wavelengths and/or light signals travelling in opposing directions. For example, as illustrated in FIGS. 1 through 3 and described in more detail below, light signals travelling through the optical system may include a first light signal 200 travelling in a first direction and a second light signal 300 travelling in a second direction opposite the first direction. The optical test apparatus 10 may split the first light signal 200 into a first reflected portion 202 and a first transmitted portion 204 and may split the second light signal 300 into a second reflected portion 302 and a second transmitted portion 304.

The test apparatus 10 may further include at least one collimator, for example, a first collimator 60. The collimator 60 generally collimates, or aligns, light being transmitted therethrough. For example, in exemplary embodiments as shown, the collimator includes a lens 62. The lens may, in some embodiments, be a graded-index lens. Alternatively, other suitable glass lenses or lenses formed from other suitable materials may be utilized. Collimator 60 may, in some embodiments, further include a ferrule 64. The ferrule 64 may be connected to and/or otherwise optically aligned with an end of the lens 62, as shown. In exemplary embodiments, the ferrule 64 may be a dual fiber ferrule, and thus define two parallel bores or channels 66 extending therethrough. Each channel 66 may accommodate an optical fiber therein for connection to the collimator 60, as discussed herein. Alternatively, the ferrule 64 may include one, three or more channels 66.

In some embodiments, a protective sleeve 68 may additionally be provided, and the collimator 60 may be housed in the protective sleeve 68. The sleeve 68 may further align the collimator 60 with other components of the test apparatus 10 as discussed herein.

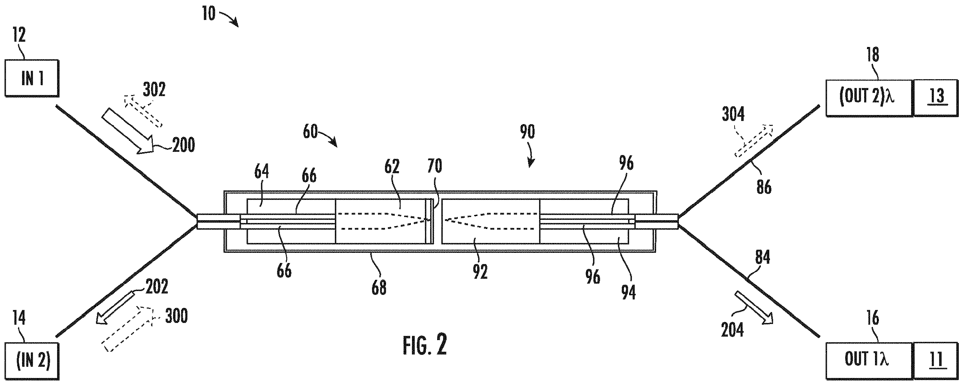

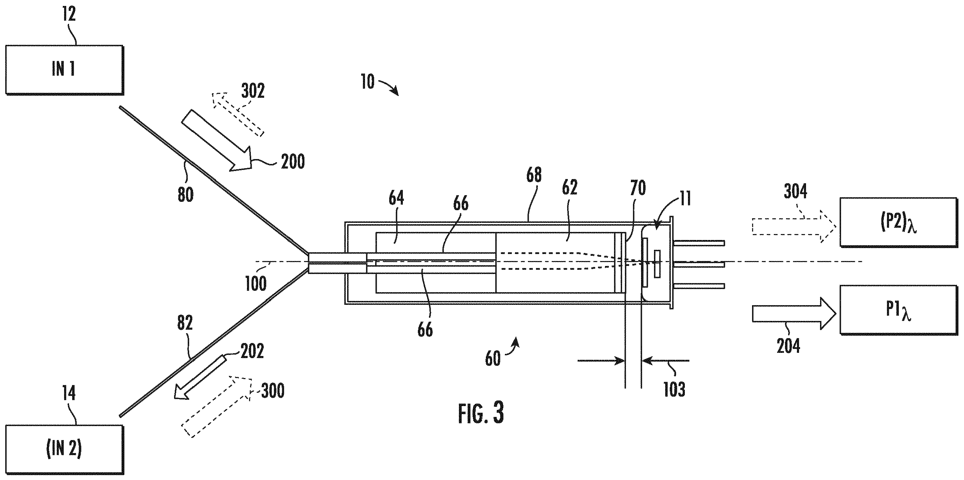

An optical filter 70 may be optically aligned with the first collimator 60. In some embodiments, for example as illustrated in FIG. 1, the optical filter 70 may be spaced from the first collimator 60, e.g., the optical filter 70 may be attached to a second collimator 90 as depicted in FIG. 1 and described in more detail below. Further, embodiments where the optical filter 70 is spaced from the first collimator 60 may also include a beam splitter 72 which may be optically aligned with the first collimator 60, e.g., the beam splitter 72 may be optically aligned with and connected to the first collimator 60 as illustrated in FIG. 1. In some embodiments, for example as illustrated in FIGS. 2 and 3, the optical filter 70 may be optically aligned with and connected to the first collimator 60. For example, the optical filter 70 may be in contact with and connected to an end of the first collimator 60. The optical filter 70 may be optically aligned with an end of the lens 62 opposite the end to which the ferrule 64 is connected. In embodiments wherein a protective sleeve 68 is utilized, the optical filter 70 may be housed within the protective sleeve 68. In various embodiments, the optical filter 70 may be attached to either the first collimator 60 or the second collimator 90, or positioned independently and aligned between the first collimator 60 and the second collimator 90.

Any suitable optical filter 70 may be utilized. For example, in some embodiments, the optical filter 70 may be or include prisms, gratings, optical thin film coating, a combination of these elements, or any other suitable components singly or in combination, which can filter out a single wavelength, a cluster of wavelengths, or a continuous wavelength band from the light signals 200 and 300. In some embodiments, the optical filter 70 may be a bandpass filter, such as a narrow band filter. For example, a narrowband filter may have a passband of about 20 nm or less, such as about 15 nm or less, such as about 10 nm or less, such as about 5 nm or less, such as about 2.0 nm or less, such as about 1.5 nm or less, such as about 1.0 nm or less, such as about 0.5 nm or less. In one example, the optical filter 70 may have a passband of about 0.4 nm centered at about 1550 nm for dense wavelength division multiplexing (DWDM) signal power measurement. Another example is a CWDM filter with center wavelength at about 1490 nm and approximately 15 nm bandwidth, which may be used for measuring the power of a PON network downstream signal.

Test apparatus 10 may further include various components for facilitating the transmission of light from the optical system with which the test apparatus 10 is connected, such as via the inputs 12 and 14, to and through the test apparatus 10. Optical test apparatus 10 may further include various components to facilitate the transmission of light from the test apparatus 10 to a measuring equipment such as a power meter or a photodetector which may be connected to and/or integrated with the test apparatus 10. These light transmissions may be provided through the first collimator 60 and via the optical filter 70 as discussed herein.

For example, test apparatus 10 may include a first optical fiber pigtail 80. The first optical fiber pigtail 80 may be connected, such as at a first end thereof, to the first input 12. Test apparatus 10 may further include a second optical fiber pigtail 82. The second optical fiber pigtail 82 may be connected, such as at a first end thereof, to the second input 14. In exemplary embodiments, the first optical fiber pigtail 80 and second optical fiber pigtail 82 are single-mode optical fibers. Further, in exemplary embodiments, each optical fiber pigtail 80, 82 may have a standard optical fiber core diameter and outer cladding diameter, i.e., 9 micrometers and 125 micrometers respectively. In other exemplary embodiments, each optical fiber pigtail 80, 82 may have any suitable core diameter and outer cladding diameter.

As illustrated in FIGS. 1-3, the first optical fiber pigtail 80 may be optically aligned and connected, e.g., at a second end thereof, to the first collimator 60. For example, the first optical fiber pigtail 80 may extend through a channel 66 of the ferrule 64 and be connected to the lens 62. Accordingly, the first optical fiber pigtail 80 may be connected to and between the first input 12 and the first collimator 60.

In exemplary embodiments, e.g., as shown in FIGS. 1 through 3, the second optical fiber pigtail 82 may be connected, such as at the second opposite end thereof, to the first collimator 60. For example, the second optical fiber pigtail 82 may extend through a channel 66 of the ferrule 64 and be connected to the lens 62. Accordingly, the second optical fiber pigtail 82 may be connected to and between the second input 14 and the first collimator 60. Such connections may facilitate the various light transmissions therethrough as discussed herein.

In embodiments such as the example embodiment illustrated by FIG. 1 where the beam splitter 72 is provided, the beam splitter 72 may be a glass, an optical film coating, or a cubic. As is generally understood, the beam splitter 72 may transmit a portion of light received by the beam splitter 72 therethrough, and may reflect another portion of the received light. In exemplary embodiments, the beam splitter 72 may reflect 50% of the light and transmit 50% of the light. Alternatively, the beam splitter 72 may reflect between 40% and 60% of the light and transmit between 60% and 40% of the light, such as reflect between 45% and 55% of the light and transmit between 55% and 45% of the light. In further embodiments, the beam splitter 72 may reflect about eighty percent (80%) of the light or more, such as about ninety percent (90%) of the light or more, such as about ninety-five percent (95%), and may transmit about twenty percent (20%) of the light or less, such as about ten percent (10%) of the light or less, such as about five percent (5%) of the light. In other alternative embodiments, any suitable relative percentages of transmitted and reflected light may be utilized.

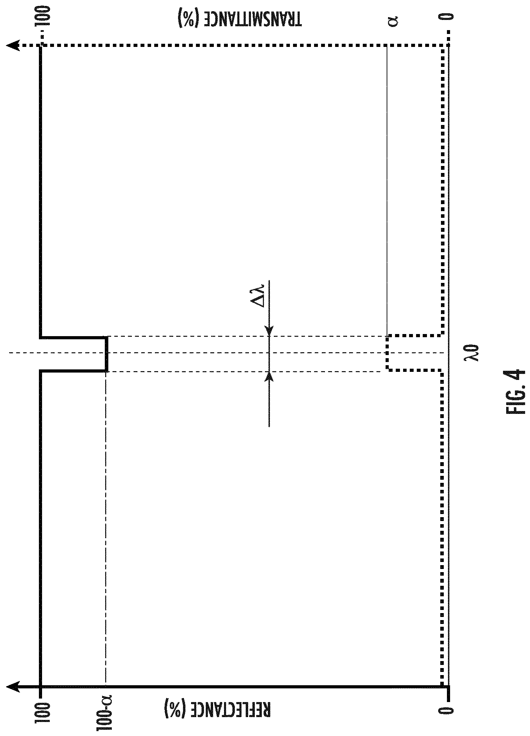

In embodiments where the beam splitter 72 is not included, e.g., as illustrated in FIGS. 2 and 3, the optical filter 70 may both filter and split the received light signals 200 and 300. For example, the optical filter 70 may be a bandpass filter having a spectral reflectance/transmittance curve similar to the example curves shown in FIG. 4. The passband may be centered at wavelength λ₀, and may be a theoretically rectangular passband, as illustrated in FIG. 4. The bandwidth is Δλ. Within the passband, a first portion of light from the first input 12 and the second input 14 with the percentage of α% passes the filter, while a second portion of the light with the percentage of (100 - α)% is reflected by the optical filter 70. Outside the passband, all light is reflected. Thus, for example, the reflected portions 202 and 302 may include one hundred percent (100%) of the light signals 200 and 300 outside of the passband and one hundred minus alpha percent (100 - α)% of the light signals 200 and 300 within the passband, and the transmitted portions 204 and 304 may include α% of the light signals 200 and 300 within the passband. In various embodiments, the percentage α may include any of the percentages described above with respect to the beam splitter 72. For example, α may be about five. In one example, the bandpass filter can be centered at about 1550 nm with approximately 0.4 nm passband, and have a sampling ratio of about 5 % (e.g., alpha may be about five) for inline dense wavelength division multiplexing (DWDM) signal power measurement. The foregoing percentages, bandwidths, and centers are provided by way of example only. In practice, the practical filtering spectrum may deviate from the foregoing examples due to various factors such as light loss, manufacturing tolerances, and other reasons.

Referring now to FIGS. 1 and 2, in some embodiments, test apparatus 10 includes a second collimator 90. The collimator 90 generally collimates, or aligns, light being transmitted therethrough. The second collimator 90 may further facilitate the various transmissions of light as discussed herein. For example, in exemplary embodiments as shown, the collimator includes a lens 92. The lens may, in some embodiments, be a graded-index lens. Alternatively, other suitable glass lenses or lenses formed from other suitable materials may be utilized. Collimator 90 may, in some embodiments, further include a ferrule 94. The ferrule 94 may be connected to and/or otherwise optically aligned with an end of the lens 92, as shown. In exemplary embodiments, the ferrule 94 may be a dual fiber ferrule, and thus define two parallel bores or channels 96 extending therethrough. Each channel 96 may accommodate an optical fiber therein for connection to the collimator 90, as discussed herein. Alternatively, the ferrule 94 may include one, three or more channels 96.

In embodiments wherein a protective sleeve 68 is utilized, the second collimator 90 may be housed in the protective sleeve 68.

As illustrated, the second collimator 90 may be spaced from the first collimator 60, such as along a longitudinal axis 100. Accordingly, a longitudinal gap 102 may be defined between beam splitter 70 and collimator 90. The collimator 90 may further be optically aligned with the optical filter 70 and, in some embodiments, the beam splitter 72. Light travelling from the first collimator 60 to the second collimator 90 or vice versa may be transmitted across this gap 102. The gap 102 may be determined to obtain a desired light transmission efficiency. In exemplary embodiments, the gap may be less than or equal to 20 millimeters, such as less than or equal to 15 millimeters, such as between 3 millimeters and 20 millimeters, such as between 4 millimeters and 15 millimeters, such as between 5 millimeters and 10 millimeters. The second collimator 90 may further have an opposite orientation along the longitudinal axis 100 to the first collimator, such that the lenses 62, 92 face each other and are proximate each other relative to the ferrules 64, 94.

As may be seen in FIGS. 1 and 2, test apparatus 10 may further include, for example, a first output (OUT1_{λ}, where lambda represents the wavelength(s) of light passing the optical filter 70) 16 and a second output (OUT2_{λ}) 18. The first output 16 may be connected to a first photodetector 11 and the second output 18 may be connected to a second photodetector 13. Connecting each output 16 and 18 to a respective photodetector 11 and 13 permits measurement of optical power for selected wavelength components in the signals 200 and 300. If the outputs 16 and 18 are connected to a spectral characterization apparatus, such as an optical spectrum analyzer, the spectrum of the signals 200 and 300 within the passband of the filter 70 may be measured as well.

In these embodiments, test apparatus 10 may further include a third optical fiber pigtail 84. The third optical fiber pigtail 84 may be connected, such as at a first end thereof, to the first output 16. Test apparatus 10 may further include a fourth optical fiber pigtail 86. The fourth optical fiber pigtail 86 may be connected, such as at a first end thereof, to the second output 18. In exemplary embodiments, the third optical fiber pigtail 84 and fourth optical fiber pigtail 86 are single-mode or multi-mode optical fibers having any suitable core size. Further, in exemplary embodiments, each optical fiber pigtail 84, 86 may have an optical fiber core that is greater, i.e. greater in cross-sectional diameter, than the cores of the first and second optical fiber pigtails 80 and 82. For example, each optical fiber pigtail 84, 86 may have an optical fiber core and outer cladding diameter that are 62.5 micrometers and 125 micrometers respectively while the first and second optical fiber pigtails 80 and 82 may, as mentioned above, have a core diameter of 9 micrometers, e.g., when the first and second optical fiber pigtails 80 and 82 include single-mode optical fibers, or may have a core diameter of 50 micrometers, e.g., when the first and second optical fiber pigtails 80 and 82 include multi-mode optical fibers. As another example, the first and second optical fiber pigtails 80 and 82 may each have a core diameter of 9 micrometers and the third and fourth optical fiber pigtails may each have a core diameter of 50 micrometers. Advantageously, the third and fourth optical fiber pigtails 84 and 86 having such larger cores capture a significant amount of light therein with reduced perturbation by modal variations along the optical paths.

In these embodiments, the third optical fiber pigtail 84 may be connected, such as at a second end, to the second collimator 90. For example, the third optical fiber pigtail 84 may extend through a channel 96 of the ferrule 94 and be connected to the lens 92. Accordingly, the third optical fiber pigtail 84 may be connected to and between the first output 16 and the second collimator 90. The fourth optical fiber pigtail 86 may be connected to the second collimator 90. In some embodiments, as illustrated in FIGS. 1 and 2, the fourth optical fiber pigtail 86 may be connected, i.e. at a second end thereof, to the second collimator 90. For example, the fourth optical fiber pigtail 86 may extend through a channel 96 of the ferrule 94 and be connected to the lens 92. Accordingly, the fourth optical fiber pigtail 86 may be connected to and between the second output 18 and the second collimator 90. Such connections may facilitate the various light transmissions therethrough as discussed herein.

As mentioned, the test apparatus 10 may be connected to and in line with an optical system, such as an optical communications system. Thus, in some embodiments, first light signal 200 travelling through the optical system is transmitted through the first optical fiber pigtail 80 as discussed. This light 200 is further transmitted from the first optical fiber pigtail 80 to and through the first collimator 60, and from the first collimator 60 to the optical filter 70 and, in some embodiments, beam splitter 72. As discussed, a reflected portion 202 of the light 200 may be reflected by the optical filter 70 or beam splitter 72 to the second optical fiber pigtail 82, and through the second optical fiber pigtail 82 back to the optical system via the second input 14 as discussed and as illustrated in FIGS. 1 through 3. Further, in some embodiments, e.g., as shown in FIGS. 1 and 2, a transmitted portion 204 of the first light signal 200 may be transmitted through the optical filter 70 (and, in some embodiments, the beam splitter 72) to the second collimator 90, and from the second collimator 90 to the third optical fiber pigtail 84 and first output 16. As mentioned, the outputs 16 and 18 may each be connected to a respective photodetector 11 and 13, thus, transmitted portion 204 may be further transmitted through the third optical fiber pigtail 84 and first output 16 to the respective photodetector 11 or 13. Second light signal 300 may be transmitted from the optical system to and through the second optical fiber pigtail 82 via the second input 14, and from the second optical fiber pigtail 82 to and through the first collimator 60. A reflected portion 302 of the second light signal 300 may be transmitted from the optical filter 70 or beam splitter 72 back to the optical system via the first optical fiber pigtail 80. A transmitted portion 304 of the second light signal 300 may further be transmitted from the first collimator 60 to and through the optical filter 70 and, in some embodiments, the beam splitter 72 to the second collimator 90. The second transmitted portion 304 may then be transmitted from the second collimator 90 to and through the fourth optical fiber pigtail 86, and from the fourth optical fiber pigtail 86 to the second output 18.

Referring now specifically to FIG. 3, in some embodiments, optical test apparatus 10 may further include a photodetector 11 integrated into the test apparatus 10. In exemplary embodiments, the photodetector 11 may be a photodiode. The photodetector may or may not include a flat or lensed window. In embodiments wherein a protective sleeve 68 is utilized, the photodetector 11 may be housed in the protective sleeve 68. In this embodiment, the sampled and wavelength-filtered signal components from IN 1 and IN 2, e.g., the first and second transmitted portions 204 and 304, can be detected and converted into electric signals directly by the optical test apparatus 10. In some embodiments, the photo detector 11 may be a multi-element detector, such that signal components from IN 1 or IN 2 can be detected separately. In other embodiments, the photodetector 11 may have only a single element, such that the total spectral power in IN 1 and IN 2, i.e., P1_{λ}, and P2_{λ}, is detected. If the wavelength components from IN 1 and IN 2 are different, P1_{λ} and P2_{λ}. can still be measured separately. In this embodiment, the optical filter 70 can be prisms, gratings, optical thin film coating, or any other suitable components.

As illustrated, the photodetector 11 may be spaced from the first collimator 60 and optical filter 70, such as along a longitudinal axis 100. Accordingly, a longitudinal gap 103 may be defined between optical filter 70 and photodetector 11. Light travelling from the first collimator 60 to the photodetector 11 may be transmitted across this gap 103. The gap 103 may be determined to obtain a desired responsivity. In exemplary embodiments, the gap may be less than or equal to 20 millimeters, such as less than or equal to 15 millimeters, such as between 3 millimeters and 20 millimeters, such as between 4 millimeters and 15 millimeters, such as between 5 millimeters and 10 millimeters.

In various embodiments, e.g., as illustrated in FIGS. 1 through 3, the optical test apparatus 10 may define a first reflection path, e.g., the path of first reflected portion 202 as described above, and a first transmission path, e.g., the path of the first transmitted portion 204 as described above. The first reflection path may be at least partially defined by the first optical fiber pigtail 80, the optical filter 70 and beam splitter 72, and the second optical fiber pigtail 82. For example, the first reflection path may extend from the first optical fiber pigtail 80 to the optical filter 70 and from the optical filter 70 (and/or beam splitter 72) to the second optical fiber pigtail 82. The first transmission path may be at least partially defined by the first optical fiber pigtail 80, the optical filter 70, and the first photodetector 11. For example, the first transmission path may extend from the first optical fiber pigtail 80 through the optical filter 70 (and/or beam splitter 72) to the first photodetector 11.

The optical test apparatus 10 may further define a second reflection path, e.g., the path of second reflected portion 302 as described above, and a second transmission path, e.g., the path of the second transmitted portion 304 as described above. The second reflection path may be at least partially defined by the second optical fiber pigtail 82, the optical filter 70 and beam splitter 72, and the first optical fiber pigtail 80. For example, the second reflection path may extend from the second optical fiber pigtail 82 to the optical filter 70 and from the optical filter 70 (and/or beam splitter 72) to the first optical fiber pigtail 80. The second transmission path may be at least partially defined by the second optical fiber pigtail 82, the optical filter 70 (and/or beam splitter 72), and a photodetector. For example, in embodiments such as those illustrated in FIGS. 1 and 2, the second transmission path may be partially defined by and may extend to the second photodetector 13, e.g., the second transmission path may extend from the second optical fiber pigtail 82 through the optical filter 70, the second collimator 90, the fourth pigtail 86, and to the second photodetector 13. As another example, in embodiments such as the embodiment illustrated in FIG. 3, the second transmission path may extend from the second optical fiber pigtail 82 through the optical filter 70 to the photodetector 11.

In these embodiments, the transmitted portions 204 and 304 may be transmitted to and through the first collimator 60, and from the first collimator 60 to and through the optical filter 70. Further, the transmitted portions 204 and 304 may be transmitted through the optical filter 70 to the photodetector(s) 11 and/or 13. The transmitted light 204 and 304 may be converted by the photodetector(s) 11 and/or 13 to an electrical signal, and the electrical signal may be transmitted from the photodetector(s) 11 and/or 13 to a power monitor or a power meter.

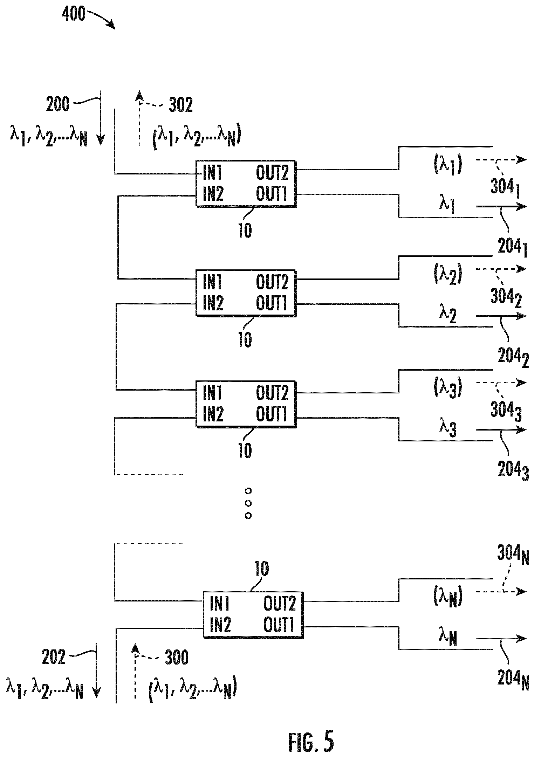

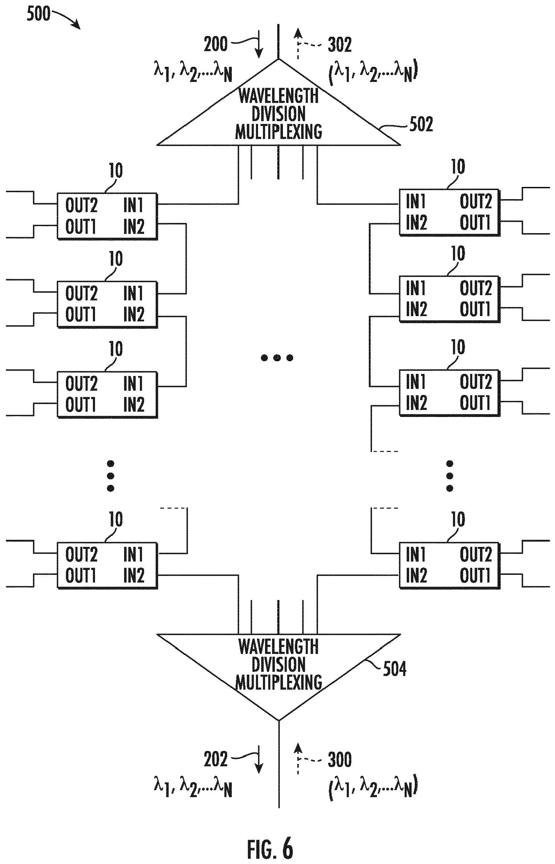

Turning now to FIGS. 5 and 6, embodiments of the present disclosure may also include an inline multi-wavelength power measurement apparatus 400 or 500 comprising a plurality of optical test apparatuses 10. The plurality of test apparatuses 10 may be any one or combination of the embodiments illustrated in FIGS. 1 through 3. Such test apparatuses 10 may be combined, as described in more detail below, to provide an inline multi-wavelength power measurement apparatus 400 or 500 where each test apparatus 10 of the plurality of test apparatuses 10 samples a portion of the light signals 200 and 300 at a particular wavelength distinct from the wavelength sampled by other test apparatuses 10 of the plurality of test apparatuses 10. For example, the inline multi-wavelength power measurement apparatus 400 or 500 may include a first optical test apparatus 10 having an optical filter 70 with a first passband and a second optical test apparatus 10 having an optical filter 70 with a second passband different from the first passband.

As mentioned, the apparatus 10, 400, and/or 500 disclosed herein may be configured to test or measure a first light signal 200 travelling in a first direction and a second light signal 300 travelling in a second direction opposite the first direction. In the example embodiments illustrated by FIGS. 5 and 6, the first and second light signals 200 and 300 each include N wavelength components, e.g., the light signals include multiple wavelengths λ₁, λ₂, etc., up to and including λ_{N}. The ratio α of each test apparatus 10, e.g. of the optical filter 70 or beam splitter 72 thereof, can be optimized for performing inline spectral power measurement, selected based upon the traffic signal conditions. In some embodiments, as shown in FIG. 5, the inline multi-wavelength power measurement apparatus 400 may include a plurality of optical test apparatuses 10 whose inputs are serially connected. For example, as illustrated in FIG. 5, the second input (IN 2) 14 of the second optical fiber pigtail 82 of one optical test apparatus 10 of the plurality of optical test apparatuses 10 may be directly connected to the first input (IN 1) 12 of the first optical fiber pigtail 80 of an adjacent one of the plurality of optical test apparatuses 10. The number of optical test apparatuses 10 can flexibly vary as needed. For example, as illustrated in FIG. 5, the inline multi-wavelength power measurement apparatus 400 may include N serially connected optical test apparatuses 10 for measuring power of the light signals 200 and 300 at each of the N wavelengths. As may be seen in FIG. 5, each test apparatus 10 may be configured to transmit light at one of the multiple wavelengths λ₁, λ₂, etc., up to and including λ_{N}. For example, a first optical test apparatus 10 may transmit a first transmitted portion 204₁ at wavelength λ₁ and a second transmitted portion 304₁ also at wavelength λ₁, while a second optical test apparatus 10 may transmit first and second transmitted portions 204₂ and 304₂ at wavelength λ₂, etc. Additionally, where the first and second light signals 200 and 300 travel in first and second opposing directions, the first optical test apparatus 10 may be upstream of the adjacent second optical test apparatus 10 in the first direction while the first optical test apparatus 10 is downstream of the second optical test apparatus 10 in the second direction.

In some embodiments, as shown in FIG. 6, the inline multi-wavelength power measurement apparatus 500 may include a first wavelength division multiplexer 502 connected to the first optical fiber pigtail 80 of the first optical test apparatus 10, such as by the first input 12 of the first optical fiber pigtail 80, and a second wavelength division multiplexer 504 connected to the second optical fiber pigtail 82 of the second optical test apparatus 10, such as by the second input 14 of the second optical fiber pigtail 82. The wavelength division multiplexers 502 and 504 may each demultiplex one of the signals 200 and 300 and multiplex the other of the signals 200 and 300, in particular the reflected portions 202 and 302 thereof. For example, as shown in FIG. 6, the first wavelength division multiplexer 502 demultiplexes the first light signal 200 into multiple components having differing wavelengths and directs various of the components of the first light signal 200 each to a corresponding test apparatus 10 configured to measure light of the appropriate wavelength (e.g., based on the bandpass of the optical filter 70 of the optical test apparatus 10). For example, a component of the first light signal 200 having a wavelength λ₁ may be directed to an optical test apparatus 10 having an optical filter 70 where the bandpass of the optical filter 70 includes, e.g., is centered on, the wavelength λ₁. The first multiplexer 502 also multiplexes the reflected portions 302 from each of the plurality of optical test apparatuses 10, such that the reflected portion 302 returned to the optical system includes multiple wavelength components (e.g., λ₁, λ₂, etc., up to and including λ_{N}). Similarly, the second multiplexer 504 multiplexes the first reflected portions 202 reflected from each of the plurality of optical test apparatuses 10 and demultiplexes the second signal 300 from the optical system.

Test apparatus 10 in accordance with the present disclosure may advantageously provide relatively non-complex optical structures which alleviate complexities in manufacturing and improved detectability while being modal insensitive.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An optical test apparatus, comprising:
a collimator comprising a dual-fiber ferrule and a collimating lens;
an optical filter optically aligned with the collimator;
a first optical fiber pigtail connected to the collimator at a first bore of the dual-fiber ferrule;
a second optical fiber pigtail connected to the collimator at a second bore of the dual-fiber ferrule; and
a photodetector in optical communication with the collimator;
wherein the optical test apparatus defines a reflection path from the first optical fiber pigtail to the optical filter and from the optical filter to the second optical fiber pigtail and a transmission path from the first optical fiber pigtail through the optical filter to the photodetector.

2. The optical test apparatus of claim 1, wherein the reflection path is a first reflection path and the transmission path is a first transmission path, and wherein the optical test apparatus further defines a second reflection path from the second optical fiber pigtail to the optical filter and from the optical filter to the first optical fiber pigtail and a second transmission path from the second optical fiber pigtail through the optical filter to the photodetector.

3. The optical test apparatus of claim 1, further comprising a protective sleeve, wherein the collimator and the photodetector are housed within the protective sleeve.

4. The optical test apparatus of claim 1, wherein the photodetector is spaced from the collimator.

5. The optical test apparatus of claim 1, wherein the collimator is a first collimator, further comprising a second collimator, the second collimator comprising a dual-fiber ferrule and a collimating lens, the collimating lens of the second collimator facing the collimating lens of the first collimator.

6. The optical test apparatus of claim 5, further comprising a protective sleeve, wherein the first collimator and the second collimator are housed within the protective sleeve.

7. The optical test apparatus of claim 5, further comprising a third optical fiber pigtail connected to the second collimator at a first bore of the dual-fiber ferrule of the second collimator and a fourth optical fiber pigtail connected to the second collimator at a second bore of the dual-fiber ferrule of the second collimator.

8. The optical test apparatus of claim 7, wherein the third optical fiber pigtail and the fourth optical fiber pigtail each have an optical fiber core that is larger than the optical fiber cores of the first optical fiber pigtail and the second optical fiber pigtail.

9. The optical test apparatus of claim 7, wherein the photodetector is a first photodetector and is connected to the third optical fiber pigtail, further comprising a second photodetector connected to the fourth optical fiber pigtail.

10. The optical test apparatus of claim 9, wherein the reflection path is a first reflection path, the transmission path is a first transmission path, and the first transmission path extends through the third fiber optic pigtail to the first photodetector, and wherein the optical test apparatus further defines a second reflection path from the second optical fiber pigtail to the optical filter and from the optical filter to the first optical fiber pigtail and a second transmission path from the second optical fiber pigtail through the optical filter to the fourth fiber optic pigtail and the second photodetector.

11. The optical test apparatus of claim 1, further comprising a beam splitter optically aligned with the collimator.

12. An inline multi-wavelength power measurement apparatus, comprising:
a first optical test apparatus, the first optical test apparatus comprising:
a collimator comprising a dual-fiber ferrule and a collimating lens;
an optical filter having a first passband and optically aligned with the collimator of the first optical test apparatus;
a first optical fiber pigtail connected to the collimator of the first optical test apparatus at a first bore of the dual-fiber ferrule of the first optical test apparatus;
a second optical fiber pigtail connected to the collimator of the first optical test apparatus at a second bore of the dual-fiber ferrule of the first optical test apparatus; and a photodetector in optical communication with the collimator of the first optical test apparatus;
wherein the first optical test apparatus defines a reflection path from the first optical fiber pigtail of the first optical test apparatus to the optical filter having the first passband and from the optical filter having the first passband to the second optical fiber pigtail of the first optical test apparatus and a transmission path from the first optical fiber pigtail of the first optical test apparatus through the optical filter having the first passband to the photodetector of the first optical test apparatus; and
a second optical test apparatus serially connected to the first optical test apparatus, the second optical test apparatus comprising:
a collimator comprising a dual-fiber ferrule and a collimating lens;
an optical filter having a second passband different from the first passband and optically aligned with the collimator of the second optical test apparatus;
a first optical fiber pigtail connected to the collimator of the second optical test apparatus at a first bore of the dual-fiber ferrule of the second optical test apparatus;
a second optical fiber pigtail connected to the collimator of the second optical test apparatus at a second bore of the dual-fiber ferrule of the second optical test apparatus; and
a photodetector in optical communication with the collimator of the second optical test apparatus;
wherein the second optical test apparatus defines a reflection path from the first optical fiber pigtail of the second optical test apparatus to the optical filter having the second passband and from the optical filter having the second passband to the second optical fiber pigtail of the second optical test apparatus and a transmission path from the first optical fiber pigtail of the second optical test apparatus through the optical filter having the second passband to the photodetector of the second optical test apparatus.

13. The inline multi-wavelength power measurement apparatus of claim 12, wherein the second optical fiber pigtail of the first optical test apparatus is directly connected to the first optical fiber pigtail of the second optical test apparatus.

14. The inline multi-wavelength power measurement apparatus of claim 12, further comprising a first wavelength division multiplexer connected to the first optical fiber pigtail of the first optical test apparatus and a second wavelength division multiplexer connected to the second optical fiber pigtail of the second optical test apparatus.

15. The inline multi-wavelength power measurement apparatus of claim 12, wherein the inline multi-wavelength power measurement apparatus is configured to measure power of light travelling in both a first direction and a second direction opposite the first direction, wherein the first optical test apparatus is upstream of the second optical test apparatus in the first direction and the first optical test apparatus is downstream of the second optical test apparatus in the second direction.

16. The inline multi-wavelength power measurement apparatus of claim 12, wherein the reflection path of the first optical test apparatus is a first reflection path of the first optical test apparatus and the transmission path of the first optical test apparatus is a first transmission path of the first optical test apparatus, wherein the first optical test apparatus further defines a second reflection path from the second optical fiber pigtail of the first optical test apparatus to the optical filter having the first passband and from the optical filter having the first passband to the first optical fiber pigtail of the first optical test apparatus and a second transmission path of the first optical test apparatus from the second optical fiber pigtail of the first optical test apparatus through the optical filter having the first passband to the photodetector of the first optical test apparatus; and wherein the reflection path of the second optical test apparatus is a first reflection path of the second optical test apparatus and the transmission path of the second optical test apparatus is a first transmission path of the second optical test apparatus, and wherein the second optical test apparatus further defines a second reflection path from the second optical fiber pigtail of the second optical test apparatus to the optical filter having the second passband and from the optical filter having the second passband to the first optical fiber pigtail of the second optical test apparatus and a second transmission path from the second optical fiber pigtail of the second optical test apparatus through the optical filter having the second passband to the photodetector of the second optical test apparatus.

17. The inline multi-wavelength power measurement apparatus of claim 12, wherein the collimator of the first optical test apparatus is a first collimator of the first optical test apparatus and the collimator of the second optical test apparatus is a first collimator of the second optical test apparatus, each of the first optical test apparatus and the second optical test apparatus further comprising a second collimator, each second collimator comprising a dual-fiber ferrule and a collimating lens, the collimating lens of each second collimator facing the collimating lens of the respective first collimator.

18. The inline multi-wavelength power measurement apparatus of claim 17, wherein each of the first optical test apparatus and the second optical test apparatus further comprises a third optical fiber pigtail connected to each respective second collimator at a first bore of the dual-fiber ferrule of the second collimator and a fourth optical fiber pigtail connected to each respective second collimator at a second bore of the dual-fiber ferrule of the second collimator.

19. The inline multi-wavelength power measurement apparatus of claim 18, wherein the photodetector of the first optical test apparatus is a first photodetector of the first optical test apparatus, the photodetector of the second optical test apparatus is a first photodetector of the second optical test apparatus, each first photodetector is connected to the corresponding third optical fiber pigtail, each of the first optical test apparatus and the second optical test apparatus further comprising a second photodetector connected to the corresponding fourth optical fiber pigtail.
